# FASCICULE DE BREVET EUROPEEN

(11) **EP 4 473 203 B1**
(45) Date de publication et mention de la délivrance du brevet: **04.03.2026**
(21) Numéro de dépôt: 23706408.4
(22) Date de dépôt: 27.01.2023
(51) Int. Cl.: F02C 7/18

(54) **ECHANGEUR DE CHALEUR EQUIPE D'UN SYSTEME DE DIFFUSION D'AIR ET TURBOMACHINE CORRESPONDANTE**
WÄRMETAUSCHER MIT EINEM LUFTDIFFUSIONSSYSTEM UND ZUGEHÖRIGE TURBOMASCHINE
HEAT EXCHANGER PROVIDED WITH AN AIR DIFFUSION SYSTEM AND CORRESPONDING TURBOMACHINE

(30) Priorité: 01.02.2022 FR 2200885
(43) Date de publication de la demande: 11.12.2024
(73) Titulaire: SAFRAN, 75015 Paris (FR)
(72) Inventeur: MAALOUF, Samer, 77550 MOISSY-CRAMAYEL (FR); TOUBIANA, Ephraïm, 77550 MOISSY-CRAMAYEL (FR)
(74) Mandataire: Gevers & Orès
(86) Numéro de dépôt international: PCT/FR2023/050110
(87) Numéro de publication internationale: WO 2023/148444

(56) Documents cités:
- EP-A2- 1 898 069
- WO-A2-2020/234525
- DE-A1- 102019 119 416

## Description

### Domaine de l'invention

La présente invention concerne le domaine général de l'aéronautique. Elle vise en particulier un échangeur de chaleur pour une turbomachine, notamment d'aéronef.

### Arrière-plan technique

Une turbomachine d'aéronef et un aéronef comprennent divers organes et/ou équipements devant être lubrifiés et/ou refroidis pour leur bon fonctionnement. Ces organes et/ou équipement peuvent être des paliers ou engrenages dans la turbomachine ou des composants électriques et/ou électroniques pour des systèmes électriques de la turbomachine de l'aéronef ou encore des systèmes de conditionnement des espaces intérieurs de l'aéronef. La chaleur dégagée par ces organes et/ou équipement, qui peut être très importante suivant la puissance de l'organe et/ou de l'équipement, est évacuée par échange thermique avec une source froide disponible dans la turbomachine et/ou l'aéronef.

L'échange thermique est réalisé grâce à un ou plusieurs échangeurs de chaleur qui sont installés dans la turbomachine ou dans l'aéronef et pour diverses applications. Des exemples d'échangeurs de chaleur sont décrits dans les documents WO-A2-2020/234525, EP-A2-1898069 et DE-A1-10 2019 119416.

Selon les applications, les échangeurs de chaleur utilisent de manière générale une source froide pouvant être de l'air ambiant, un air de la veine secondaire de la turbomachine, de l'eau glycolée, un fluide caloporteur de type Novec^{®}, les hydrofluorocarbures (HFC), du gaz naturel liquéfié (LNG), de l'hydrogène liquide (LH2), etc. et une source chaude pouvant être le carburant de la turbomachine, de l'huile, de l'air (bleed air) prélevé au niveau du compresseur basse pression ou haute pression de la turbomachine, ou un air de la veine primaire de la turbomachine.

Les besoins en refroidissement des fluides de lubrifiant, des systèmes électriques et/ou électroniques (machines électriques, génératrices, batteries, etc...) sont de plus en plus croissants du fait de l'accroissement des vitesses de rotation et des puissances mises en jeu pour répondre aux spécifications sur les turbomachines et de l'électrification des futurs aéronefs. Cela implique que les échangeurs de chaleur seront de plus en plus sollicités.

Par ailleurs, les nouvelles architectures de turbomachine et d'aéronef utilisant des carburants alternatifs ((LH2), (LNG)) qui sont stockés sous forme liquide à basse température (typiquement 23K pour le LH2) pour limiter le volume des réservoirs et la masse ajoutée sur l'aéronef engendre la nécessité de les réchauffer avant de les utiliser, soit l'emploi d'échangeurs de chaleur.

Sont connus les échangeurs de chaleur carburant/huile généralement dont l'acronyme anglais est FCOC pour « Fuel Cooled Oil Cooler ». Ces échangeurs de chaleur FCOC peuvent avoir une double fonction de réchauffement du carburant avant la combustion dans la chambre de combustion de la turbomachine et de refroidissement de l'huile réchauffée par les dissipations thermiques de la turbomachine. Cependant, les échangeurs de chaleur FCOC ne suffisent pas à absorber toutes les dissipations thermiques car la température du carburant est limitée en vue des contraintes de sécurité. Le complément de refroidissement est obtenu par les échangeurs de chaleur air/huile connus sous l'acronyme anglais ACOC pour « Air-Cooled Oil Cooler », en particulier ceux du type surfacique et connus sous l'acronyme SACOC. Les échangeurs de chaleur surfacique sont généralement agencés dans la veine secondaire de la turbomachine et utilisent le flux d'air secondaire pour le refroidissement de l'huile circulant dans la turbomachine. Ces échangeurs de chaleur se présentent sous la forme d'une pièce surfacique métallique permettant le passage d'huile dans des canaux usinés. Le flux d'air secondaire est guidé le long d'ailettes portées par cette pièce surfacique et qui ont pour rôle d'augmenter la surface de contact avec le flux d'air secondaire et d'extraire les calories.

L'une des problématiques observées dans les échangeurs de chaleur pour les différentes applications susmentionnées est la génération des pertes de charge supplémentaires côté air (ou gaz) puisqu'ils perturbent l'écoulement. Cela a pour effet d'augmenter la consommation de carburant spécifique (SFC) de la turbomachine et d'impacter négativement la performance de la turbomachine.

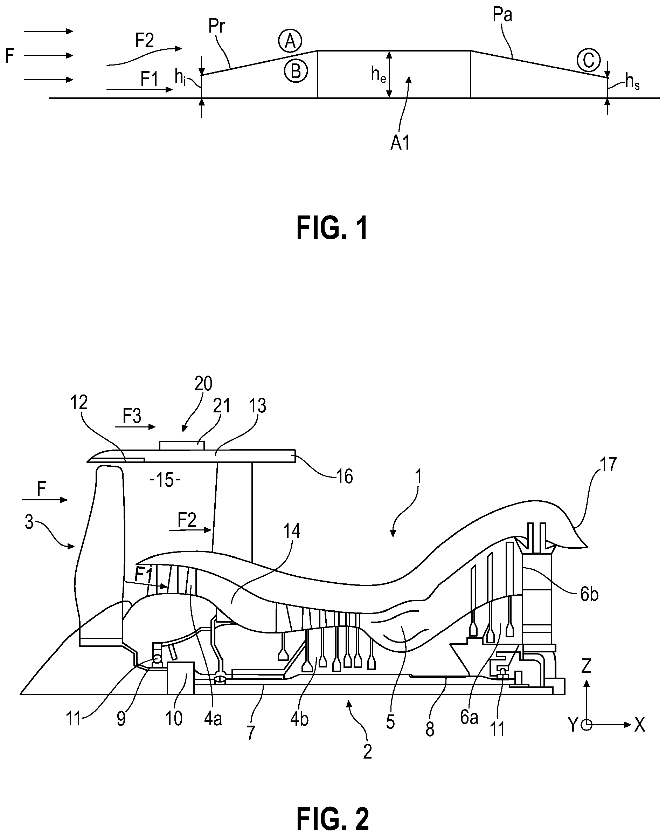

Les exemples d'échangeurs de chaleur décrits dans les brevets FR-B1-3096444 et FR-B1-3096409 (également publié sous le numéro WO-A1-2020/234525) au nom de la demanderesse, ont été proposés pour améliorer leurs performances, notamment aérothermiques. Un de ces échangeurs de chaleur représenté sur la figure 1 comprend une paroi de ralentissement Pr du flux d'air entrant dans les ailettes A1 et une paroi d'accélération Pa du flux d'air sortant des ailettes. Pour avoir un ralentissement important, le rapport entre la section hi à l'entrée de la paroi de ralentissement Pr et la hauteur he des ailettes A1, et le rapport entre la section de sortie hs des parois d'accélération Pa et la hauteur he des ailettes A1 doivent être tous deux élevés. Cependant, avec une telle paroi de ralentissement Pr, un risque de décollement peut apparaître dans la zone B si l'air entrant dans l'échangeur de chaleur est mal réparti. Un risque de décollement de la couche limite pariétale pourrait également apparaître au niveau des surfaces externes des parois de ralentissement et d'accélération qui sont en contact direct avec le flux d'air F2 contournant l'échangeur de chaleur (le flux d'air F2 étant à Mach élevé (environ 0.5 à 0.8 en croisière)), et notamment au niveau des zones A et C. Tous ces risques de décollement peuvent augmenter la perte de charge totale. Par ailleurs, une longueur trop importante des parois de ralentissement et d'accélération pour, par exemple, assurer un écoulement homogène, pourrait impacter la taille de l'échangeur de chaleur.

### Résumé de l'invention

L'objectif de la présente invention est de fournir un échangeur de chaleur permettant une meilleure optimisation des performances aérothermiques tout en réduisant les pertes de charge et en évitant d'impacter la masse considérablement.

Nous parvenons à cet objectif conformément à l'invention grâce à un échangeur de chaleur pour une turbomachine, notamment d'aéronef, d'axe longitudinal, l'échangeur de chaleur comportant :
- une paroi de support s'étendant suivant une première direction,
- une pluralité d'ailettes s'élevant chacune suivant une deuxième direction depuis une surface externe de la paroi de support, les ailettes étant destinées à être balayées par un flux d'air suivant la première direction,
- une première paroi profilée disposée en amont des ailettes et configurée de manière à guider et ralentir le flux d'air entrant dans l'échangeur de chaleur,
- une deuxième paroi profilée disposée en aval des ailettes et configurée de manière à accélérer le flux d'air sortant de l'échangeur de chaleur, et
- un panneau profilé recouvrant les ailettes, le panneau profilé s'étendant suivant la première direction entre la première paroi et la deuxième paroi auxquelles celui-ci est fixé, l'échangeur de chaleur comprenant un système de diffusion d'air comprenant un dispositif d'admission d'air configuré de manière à ralentir le flux d'air dans une troisième direction, le dispositif comportant plusieurs ouvertures d'admission d'air distinctes qui sont agencées en amont des ailettes suivant la première direction et qui sont réparties suivant la troisième direction.

Ainsi, cette solution permet d'atteindre l'objectif susmentionné. En particulier, en installant une première paroi en amont et un dispositif d'admission d'air d'un système de diffusion avec une pluralité d'ouvertures faisant office de prise d'air à l'entrée de l'échangeur de chaleur, l'écoulement d'air est doublement ralenti grâce à la variation de la section d'une part, dans la deuxième direction (radialement) et d'autre part, dans la direction azimutale. Le fait de ralentir la vitesse de l'écoulement en entrée de l'échangeur de chaleur permet en particulier de minimiser la perte de charge (voire la supprimer) et même de générer de la poussée dans certaines phases de vol de l'aéronef. Ce phénomène est connu sous « l'Effet Meredith ») et permet d'améliorer nettement les performances aérothermiques de l'échangeur de chaleur. En effet, la deuxième paroi en aval et l'énergie thermique rapportée au flux d'air accélère davantage le flux d'air en sortie de l'échangeur de chaleur. La perte de charge diminue jusqu'à disparaître à une vitesse praticable au-delà de laquelle l'échangeur contribue à la propulsion. L'effet Meredith est un phénomène physique par lequel la traînée causée par un échangeur de chaleur réchauffant l'air est compensée par une conception appropriée du canal de l'échangeur de chaleur (dispositif divergent/échangeur/convergent) capable de générer une poussée plus utile. L'effet Meredith est d'autant plus tangible que la vitesse de l'aéronef augmente. Afin d'avoir une trainée nulle et éventuellement pour générer de la poussée par l'échangeur de chaleur dans certaines phases de vol, le facteur de ralentissement doit être supérieur à 6. Le présent échangeur de chaleur est à forte performance aérodynamique et à fort ralentissement dans un encombrement limité, celui-ci répond alors aux conditions de facteur de ralentissement et de l'Effet Meredith.

L'échangeur de chaleur comprend également l'une ou plusieurs des caractéristiques suivantes, prises seules ou en combinaison :
- la première paroi présente une première extrémité formant une entrée d'air avec la paroi de support, le dispositif d'admission d'air étant situé en amont du plan dans lequel est définie l'entrée d'air.
- la première paroi présente une première extrémité reliée à la paroi de support, le dispositif d'admission d'air étant situé en aval du plan dans lequel est définie la première extrémité, les ouvertures d'admission d'air étant formées dans la première paroi et étant agencées à une distance prédéterminée de la première extrémité de la première paroi.
- le système de diffusion comprend un dispositif d'échappement d'air configuré de manière à accélérer le flux d'air dans la troisième direction, le dispositif d'échappement comportant plusieurs ouvertures d'échappement d'air distinctes qui sont agencées en aval des ailettes suivant la première direction et qui sont réparties suivant la troisième direction.

- la deuxième paroi présente une première extrémité formant une sortie d'air avec la paroi de support, le dispositif d'échappement d'air étant situé en aval du plan dans lequel est définie la sortie d'air.
- la deuxième paroi présente une première extrémité reliée à la paroi de support, le dispositif d'échappement d'air étant situé en amont du plan dans lequel est définie la première extrémité, les ouvertures d'admission étant formées dans la deuxième paroi et étant agencées à une distance prédéterminée de la première extrémité de la deuxième paroi.
- le nombre d'ouvertures d'admission d'air du dispositif d'admission d'air et /ou du dispositif d'échappement d'air est compris entre 1 et 100.
- le dispositif d'admission et/ou le dispositif d'échappement comprend/comprennent plusieurs rangées d'ouvertures, chaque rangée comprenant des ouvertures qui sont alignées suivant la troisième direction, et les ouvertures des rangées étant alignées suivant la première direction ou présentant un décalage angulaire.
- l'échangeur de chaleur comprend un dispositif de réglage de débit, le dispositif de réglage comprenant une porte mobile qui est agencée dans une ouverture, la porte mobile se déplaçant dans l'ouverture suivant la première direction et/ou suivant la deuxième direction de sorte à faire varier la section de l'ouverture.
- l'échangeur de chaleur est annulaire ou s'étend sur un secteur angulaire.

L'invention concerne également une turbomachine d'axe longitudinal comprenant une soufflante, un carter annulaire qui est centré sur l'axe longitudinal et qui entoure la soufflante, et un échangeur de chaleur tel que susmentionné.

La turbomachine comprend également l'une ou plusieurs des caractéristiques suivantes, prises seules ou en combinaison :
- la turbomachine comprend une nacelle disposée radialement à l'extérieur du carter annulaire et autour duquel est destiné à circuler un air dynamique externe, l'échangeur de chaleur étant disposé radialement à l'extérieur de la nacelle et une portion de l'air dynamique externe formant le flux d'air balayant les ailettes.
- l'échangeur de chaleur est disposé radialement à l'intérieur du carter annulaire dans lequel est destiné à circuler un écoulement d'air, une portion de l'écoulement d'air formant le flux d'air balayant les ailettes.
- la nacelle ou le carter annulaire comprend une paroi annulaire qui comporte un renfoncement dans lequel est installé l'échangeur de chaleur, les ailettes présentant une hauteur supérieure ou égale à la hauteur du renfoncement.
- le renfoncement est annulaire ou s'étend sur un secteur angulaire autour de l'axe longitudinal.
- les cloisons du dispositif d'admission et du dispositif d'échappement s'étendent à l'extérieur du renfoncement.

L'invention concerne en outre un aéronef comprenant une turbomachine telle que susmentionnée.

### Brève description des figures

L'invention sera mieux comprise, et d'autres buts, détails, caractéristiques et avantages de celle-ci apparaîtront plus clairement à la lecture de la description explicative détaillée qui va suivre, de modes de réalisation de l'invention donnés à titre d'exemples purement illustratifs et non limitatifs, en référence aux dessins schématiques annexés dans lesquels :
La figure 1 est une vue en coupe axiale et schématique d'un échangeur de chaleur selon l'art antérieur ;
La figure 2 est une vue en coupe axiale d'un exemple de turbomachine à laquelle s'applique l'invention;
La figure 3 est une vue schématique et en coupe axiale d'un échangeur de chaleur agencé à l'extérieur d'une turbomachine et équipé d'un système de diffusion d'air selon l'invention ;
La figure 4 est une vue en perspective d'un exemple d'échangeur de chaleur porté par une turbomachine d'aéronef et équipé d'un dispositif d'admission d'air en amont et un disposition d'échappement en aval selon l'invention ;
La figure 5 est une vue en coupe radiale de l'échangeur de chaleur de la figure 4 ;
La figure 6 illustre un autre mode de réalisation d'un échange de chaleur équipé d'un système de diffusion d'air selon l'invention ;
La figure 7 illustre schématiquement et suivant une vue en coupe radiale un autre exemple de réalisation d'un échangeur de chaleur selon l'invention ;
La figure 8 est une vue en coupe axiale et schématique d'un autre exemple de réalisation d'un échangeur de chaleur selon l'invention ;
La figure 9 est une vue en coupe radiale de l'échangeur de chaleur de la figure 8 ;
La figure 10 illustre suivant une coupe radiale et partielle un autre mode de réalisation d'un échangeur de chaleur selon l'invention ;
La figure 11 illustre suivant une coupe radiale un autre mode de réalisation de l'échangeur de chaleur selon l'invention ;
La figure 12 illustre un autre exemple de réalisation d'un échangeur de chaleur équipé d'un dispositif de régulation de débit d'air selon l'invention ;
La figure 13 représente une vue schématique et en coupe axiale un exemple d'échangeur de chaleur semi enterré selon l'invention ;
La figure 14 représente une vue schématique et en coupe axiale un exemple d'échangeur de chaleur enterré selon l'invention ;
La figure 15 représente un autre mode de réalisation d'un échangeur de chaleur agencé dans une veine secondaire d'une turbomachine selon l'invention.

### Description détaillée de l'invention

La figure 1 représente un échangeur de chaleur de l'art antérieur et a été décrite précédemment.

La figure 2 montre une vue en coupe axiale d'une turbomachine d'axe longitudinal X à laquelle s'applique l'invention. La turbomachine représentée est une turbomachine 1 double flux destinée à être montée sur un aéronef. Bien entendu, l'invention n'est pas limitée à ce type de turbomachine.

Dans la présente invention, les termes « amont » et « aval » sont définis par rapport à la circulation des gaz dans la turbomachine et ici suivant l'axe longitudinal X et en référence à la figure 2 de gauche à droite. De même, une turbomachine se compose généralement de plusieurs modules qui sont fabriqués indépendamment les uns des autres et qui sont assemblés ensuite les uns aux autres de manière à faciliter son assemblage, son démontage ainsi que sa maintenance.

La turbomachine 1 double flux comprend de manière générale un générateur de gaz ou moteur à turbine à gaz 2 en amont duquel est montée une soufflante ou module de soufflante 3. Le générateur de gaz 2 comprend un ensemble de compresseur de gaz (comportant ici un compresseur basse pression 4a et un compresseur haute pression 4b), une chambre de combustion 5 et un ensemble de turbine (comportant ici une turbine haute pression 6a et une turbine basse pression 6b). Classiquement, la turbomachine 1 comprend un arbre basse pression 7 qui relie le compresseur basse pression 4a et la turbine basse pression 6b pour former un corps basse pression et un arbre haute pression 8 qui relie le compresseur haute pression 4b et la turbine haute pression 6a pour former un corps haute pression. L'arbre basse pression 7, centré sur l'axe longitudinal, entraîne ici un arbre de soufflante 9. Un réducteur de vitesse 10 peut être interposé, comme ici, entre l'arbre de soufflante 9 et l'arbre basse pression 7. Des paliers de guidage 11 en rotation permettent également de guider en rotation l'arbre basse pression 7, l'arbre haute pression 8 et l'arbre de soufflante 9 par rapport à une structure fixe de la turbomachine.

La soufflante 3 est carénée par un carter de soufflante 12. Le carter de soufflante 12 est porté par une nacelle 13. Cette dernière est annulaire, centrée sur l'axe longitudinal et s'étend radialement à l'extérieur du carter de soufflante 12. La nacelle 13 est reliée à un empennage de l'aéronef ou à une aile de l'aéronef directement ou via un pylône. Le flux d'air F qui entre dans la soufflante 3 est divisé en un flux d'air primaire F1 qui circule à travers le générateur de gaz 2 dans une veine primaire 14 et un flux d'air secondaire F2 qui circule dans une veine secondaire 15 autour du générateur de gaz 2. Le flux d'air secondaire F2 est éjecté par une tuyère secondaire 16 terminant la nacelle 13 alors que le flux d'air primaire F1 est éjecté à l'extérieur de la turbomachine 1 via une tuyère d'éjection 17 située en aval du générateur de gaz 2.

Les paliers de guidage 11 et le réducteur de vitesse 10 dans cet exemple de configuration de la turbomachine 1 doivent être lubrifiés et/ ou refroidis pour assurer la performance de la turbomachine. La puissance générée par ceux-ci est dissipée dans un fluide provenant d'une source d'alimentation en fluide installée dans la turbomachine et qui permet de lubrifier et/ou de refroidir divers organes et/ou équipements de la turbomachine. Bien entendu, d'autres équipements de la turbomachine ou de l'aéronef ont une énergie thermique importante à transférer telle que de la chaleur devant être extraite et évacuée de leur environnement. Ces organes et/ou équipements peuvent être une ou des machines électriques, génératrices, batteries, un boîtier d'accessoires, des systèmes électroniques/électriques, des systèmes de refroidissement des espaces intérieurs de l'aéronef, etc. Le système d'échangeur de chaleur est également applicable bien entendu à toutes les sources froides et chaudes (l'air ambiant, un air de veine primaire ou secondaire de la turbomachine, Novec^{®}, HFC, LNG, LH2, etc.).

A cet effet, la turbomachine 1 comprend un système d'échange de chaleur 20 qui permet de refroidir le fluide destiné à lubrifier et/ou refroidir ces organes et/ou équipements. Dans le présent exemple, le fluide est une huile et la source froide destinée à refroidir l'huile est le flux d'air circulant dans ou autour de la turbomachine 1.

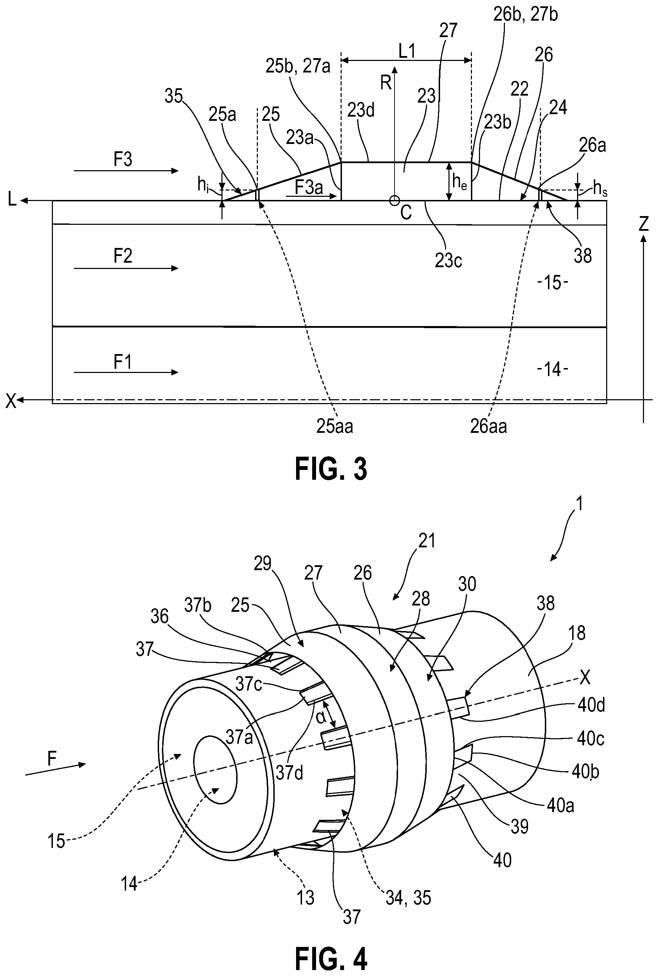

En référence aux figures 3 et 4, le système d'échange de chaleur 20 comprend un échangeur de chaleur 21 qui est monté à l'extérieur de la turbomachine 1. L'échangeur de chaleur 21 est en particulier porté par la nacelle 13. L'échangeur de chaleur 21 est disposé radialement à l'extérieur de la nacelle 13. Un flux d'air dynamique externe (ou ram air) F3 circule autour de la nacelle 13 et au moins une partie de cet air est destiné à traverser l'échangeur de chaleur 21.

L'échangeur de chaleur 21 comporte une paroi de support 22 qui s'étend suivant une première direction longitudinale L. Nous utilisons le terme « direction » pour décrire l'échangeur de chaleur 21 en particulier. En situation d'installation, la première direction L est parallèle à l'axe longitudinal X de la turbomachine 1. Dans le présent exemple, la paroi de support 22 est annulaire et centrée sur l'axe longitudinal X. Plus précisément encore, la paroi de support 22 est formée d'une portion de la paroi 18 que comporte la nacelle 13.

L'échangeur de chaleur 21 comprend également une pluralité d'ailettes 23 qui s'élèvent chacune ici depuis une surface externe 24 de la paroi de support 22 et suivant une deuxième direction R. La deuxième direction R est perpendiculaire à la première longitudinale L. La deuxième direction R est parallèle à un axe radial Z qui s'étend depuis l'axe longitudinal L de la turbomachine 1. Les ailettes 23 s'étendent également suivant la première direction L. Les ailettes 23 sont chacune de manière avantageuse continue et rectiligne. Chaque ailette 23 est généralement plate. Celles-ci sont disposées de manière parallèle les unes aux autres suivant une troisième direction C. La troisième direction est parallèle à une direction circonférentielle autour de l'axe longitudinal X en situation d'installation. Les ailettes 23 sont destinées à être balayées par le flux d'air dynamique externe F3 suivant la première direction L. De manière alternative, les ailettes 23 sont discontinues et placées en quinconce (à pas décalés) suivant la première direction ou suivant la troisième direction ou encore sont ondulées suivant la direction radiale ou longitudinale.

Chaque ailette 23 présente un bord d'attaque 23a et un bord de fuite 23b opposés suivant la première direction L. Chaque ailette 23 comprend également une première bordure longitudinale 23c et une deuxième bordure longitudinale 23d qui sont opposées suivant la deuxième direction R. La première bordure longitudinale 23c est reliée à la paroi de support 22. Celle-ci est également reliée au bord d'attaque 23a et au bord de fuite 23b, tout comme la deuxième bordure longitudinale 23d. De manière avantageuse, chaque ailette 23 présente dans cet exemple une forme générale rectangulaire. Suivant encore une autre alternative, les ailettes 23 présentent une forme trapézoïdale ou toute autre forme.

Les ailettes 23 présentent chacune une hauteur he mesurée entre la première bordure longitudinale 23c et la deuxième bordure longitudinale 23d. La hauteur he des ailettes 23 est comprise entre 5 mm et 20 mm. Chaque ailette 23 présente également une longueur L1 suivant la direction longitudinale L. La longueur L1 est mesurée entre le bord d'attaque 23a et le bord de fuite 23b de chaque ailette 23. La longueur L1 est comprise entre 5 cm et 20 cm.

L'échangeur de chaleur 21 comprend une première paroi 25 profilée disposée en amont de des ailettes 23 (suivant le sens de circulation du flux d'air le long de la surface externe 24 ou de la première direction L). La première paroi 25 est configurée de manière orienter et guider le flux d'air F3a (portion du flux d'air dynamique externe F3) qui entre dans l'échangeur de chaleur 21. Cette première paroi 25 est également configurée pour ralentir le flux d'air F3a entrant dans l'échangeur de chaleur 21. La première paroi 25 a un profil divergent.

La première paroi 25 présente une inclinaison par rapport à la première direction L dans un plan axial. En particulier, la première paroi 25 s'étend entre une première extrémité 25a et une deuxième extrémité 25b suivant sensiblement la première direction L. La première extrémité 25a, forme en amont, avec la paroi de support 22 une entrée d'air 25aa qui présente une première hauteur hi prédéterminée suivant la deuxième direction R. La première hauteur hi est inférieure à la hauteur he radiale des ailettes 23. La deuxième extrémité 25b recouvre le bord d'attaque 23a des ailettes 23. La première paroi 25 s'étend également suivant la troisième direction et dans le cas présent, la première extrémité 25a est annulaire. En particulier, la première paroi 25 présente une forme de révolution autour de l'axe longitudinal X.

L'échangeur de chaleur 21 est également pourvu d'une deuxième paroi profilée 26 disposée en aval des ailettes 23 de manière à réduire les phénomènes de recirculation qui interviennent en aval des ailettes 23. La deuxième paroi profilée 26 est également configurée pour accélérer le flux en sortie de l'échangeur de chaleur 21. La deuxième paroi 26 présente sensiblement la même configuration que celle de la première paroi 25. Elle a cependant un profil convergent. La deuxième paroi 26 s'étend également entre une première extrémité 26a et une deuxième extrémité 26b suivant la première direction L. La première extrémité 26a, en aval, forme avec la paroi de support 22 une sortie d'air 26aa qui présente une deuxième hauteur hs prédéterminée suivant la deuxième direction. La deuxième hauteur hs est inférieure à la hauteur he des ailettes 23. La deuxième extrémité 26b recouvre le bord de fuite 23b des ailettes 23.

Le rapport entre la première hauteur hi et la deuxième hauteur hs est compris entre 0.5 et 1.

L'échangeur de chaleur 21 comprend un panneau 27 profilé recouvrant les ailettes 23. Le panneau 27 est en particulier relié à la deuxième bordure longitudinale 23d de chaque ailette 23. De la sorte, le panneau 27 permet de guider et contrôler l'écoulement du flux d'air F3a à l'intérieur de l'échangeur de chaleur 21. Les ailettes 23 sont ainsi agencées radialement entre la paroi de support 22 et le panneau 27 profilé. Le panneau 27 profilé s'étend suivant la première direction longitudinale L. Le panneau 27 s'étend également suivant la troisième direction C. Dans le présent exemple, le panneau 27 est sensiblement cylindrique et centré sur l'axe longitudinal X de la turbomachine en situation d'installation dans la turbomachine 1. Le panneau 27 s'étend radialement à l'extérieur de la paroi de support 22.

Le panneau 27 s'étend entre un bord amont 27a et un bord aval 27b suivant la première direction longitudinale L. Le panneau 27 présente une longueur (mesurée entre le bord amont 27a et le bord aval 27b) qui est sensiblement égale à la longueur L1 des d'ailettes. Le bord amont 27a du panneau 27 est relié à la deuxième extrémité 25b du premier panneau 25. Le bord aval 27b est relié à la deuxième extrémité 26b de la deuxième paroi 26. Le panneau 27 s'étend suivant la première direction L entre le premier panneau 25 et le deuxième panneau 26.

En référence à la figure 4, le panneau 27 présente une surface externe 28 ayant une continuité de surface avec une surface externe 29 de la première paroi 25. La surface externe 28 présente également une continuité de surface avec une surface externe 30 de la deuxième paroi 26.

L'échangeur de chaleur 21 peut être équipé d'éléments de support (non représentés) permettant de fixer la première paroi 25 et/ou la deuxième paroi 26 à la paroi de support 22. Ces éléments de support sont placés à distance des ailettes 23, en amont des ailettes 23, et/ou en aval des ailettes 23.

Sur la figure 4, l'échangeur de chaleur 21 comprend un système diffusion d'air. Le système de diffusion comprend un dispositif d'admission d'air 35 configuré de manière à ralentir le flux d'air entrant dans l'échangeur suivant la troisième direction C. Le dispositif d'admission d'air 35 comporte plusieurs ouvertures 36 d'admission d'air qui sont distinctes et qui sont agencées en amont des ailettes 23 suivant la première direction. De manière avantageuse, les ouvertures 36 sont réparties suivant la troisième direction C et autour de l'axe longitudinal X. Ces ouvertures 36 sont formées par des cloisons 37 qui sont espacées des unes des autres et qui sont réparties autour de la troisième direction C. Chaque ouverture 36 d'admission d'air est délimitée suivant la troisième direction par deux cloisons 37 espacées suivant la troisième direction C. En d'autres termes, les ouvertures d'admission 36 s'étendent sur un secteur angulaire α (alpha) compris entre 1 et 360°. Les ouvertures 36 (et les cloisons 37) sont réparties azimutalement et de préférence d'une manière équidistante. Les cloisons 37 s'étendent, vers l'amont, depuis la première extrémité 26a de la première paroi 25 jusqu'à la paroi de support 22. En d'autres termes, les cloisons 37 prolongent la première paroi 25 et sont reliées à la paroi de support 22.

Chaque cloison 37 est plane et légèrement incurvée afin de suivre le profil aérodynamique de la première paroi 25 et pour ne pas perturber le flux d'air. Plus précisément encore, chaque cloison 37 comprend un bord amont 37a relié à la paroi de support 22 et un bord aval 37b relié à la première extrémité 25a de la première paroi 25. Le bord aval 37a présente une hauteur supérieure à la hauteur du bord amont qui se présente sous la forme d'un sommet (celui-ci étant lié à la paroi de support ou la paroi annulaire 18). Chaque cloison 37 s'étend également entre un premier bord latéral 37c et un deuxième bord latéral 37d suivant la troisième direction C. Chaque cloison présente une paroi d'une fine épaisseur comprise entre 0,2 et 2mm. Les cloisons présentent une telle configuration, et notamment un tel profil, afin de minimiser la perturbation et par la suite la perte de charge correspondante. Le flux d'air peut circuler en-dessous de la cloison.

Les ouvertures 36 débouchent dans l'entrée d'air 25aa formée par la première extrémité 25a et par la paroi de support 22. Le flux d'air F3a entre par chaque ouverture 36 d'admission (prises d'air), circule, sous la première paroi 25 puis traverse les ailettes 23. L'air entrant dans l'échangeur de chaleur 21 est doublement ralenti grâce aux ouvertures 36 et à la paroi première 25. En particulier, le flux d'air F3a qui entre par les ouvertures d'admission 36 occupe une partie de la circonférence de l'échangeur de chaleur 21. Comme nous l'avons vu, chaque ouverture 36 s'étend sur un secteur angulaire α et la somme des secteurs angulaires est définie comme αT compris entre 1° et 360° (pas toute la circonférence (360°)). Le flux d'air F3 qui se trouve au niveau de l'entrée d'air 25aa de la première paroi 25 est réparti sur toute la circonférence de la première paroi 25 (soit 360°). Cela implique une variation de la section du passage du flux d'air entre le plan radial passant par 37a (dont la somme des secteurs angulaires est αT) et le plan radial passant par l'entrée d'air 25aa qui occupe toute la circonférence 360°. Cette variation de section correspond au rapport 1/αT. Si le rapport est de 0.5 (les ouvertures d'amission 36 occupent 50% de la circonférence), il y aura un rapport d'augmentation de section de 2 entre la section d'admission d'air (au niveau de niveau 37a) et la section d'entrée (au niveau de l'entrée d'air 25aa), d'où un ralentissement de l'écoulement dans la direction azimutale d'un facteur 2. S'ajoute à cela le ralentissement dû à la variation de la section dans la direction radiale, d'où également la notion de « double ralentissement ».

Le nombre d'ouvertures 36 d'admission d'air du dispositif d'admission d'air 35 est compris entre 1 et 100. Ce nombre dépend de plusieurs facteurs (type d'application, secteur angulaire occupé par l'échangeur de chaleur 21, rapport de changement de section dans la deuxième radiale, forme de l'échangeur de chaleur (annulaire, cubique ou autre), etc...).

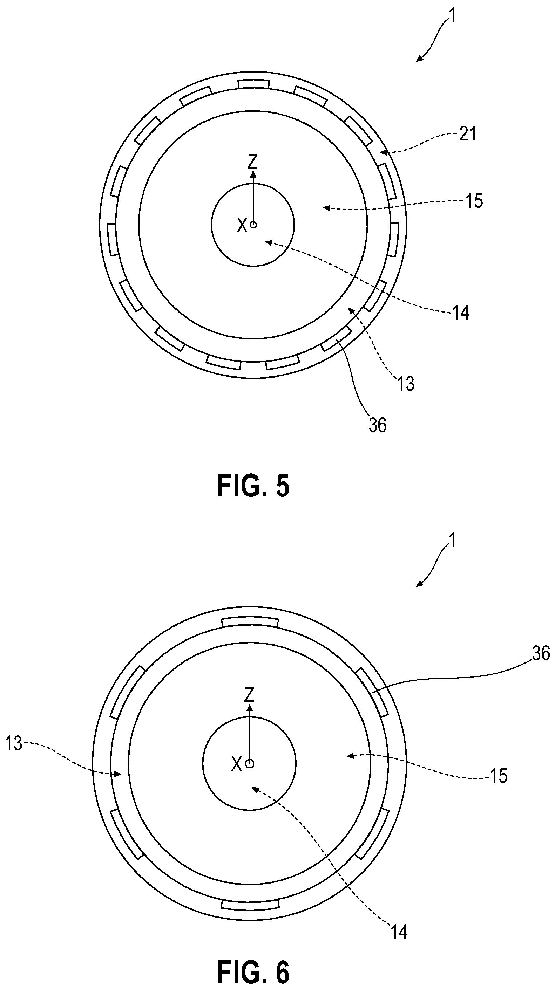

Sur la figure 5, le dispositif d'admission 35 comprend 15 (quinze) ouvertures d'admission 36 réparties régulièrement autour de l'axe longitudinal.

Sur la figure 6, le dispositif 35 comprend 6 (six) ouvertures 36.

Le système de diffusion de l'échangeur de chaleur 21 comprend également un dispositif d'échappement d'air 38 qui est situé en aval des ailettes 23. Le dispositif d'échappement d'air 38 présente une configuration similaire à celle du dispositif d'admission 35. Le dispositif 38 comprend en particulier des ouvertures d'échappement 39 qui sont réparties régulièrement autour de la troisième direction C (et axe longitudinal X) et qui sont séparées par des cloisons 40. Chaque cloison 40 s'élève depuis la surface externe 24 suivant la deuxième direction R. Chaque cloison 40 comprend un bord amont 40a relié à la première extrémité 26a de la deuxième paroi 26 et un bord aval 40b relié à la paroi de support 22. Le bord amont 40a présente une hauteur supérieure à la hauteur du bord aval 40b. Le bord aval 40b se présente sous la forme d'un sommet également. Chaque cloison 40 s'étend également entre un premier bord latéral 40c et un deuxième bord latéral 40d suivant la troisième direction. Les ouvertures 39 débouchent dans la sortie d'air 26aa formée par la paroi de support 22 et la première extrémité 26a de la deuxième paroi 26. De la sorte, l'air qui quitte les ailettes 23, circule sous la deuxième paroi 26 puis dans les ouvertures d'échappement 39 du dispositif 38. Dans ce mode de réalisation, le nombre d'ouvertures d'admission 36 et d'ouvertures d'échappement 39 est identique mais peut être différent.

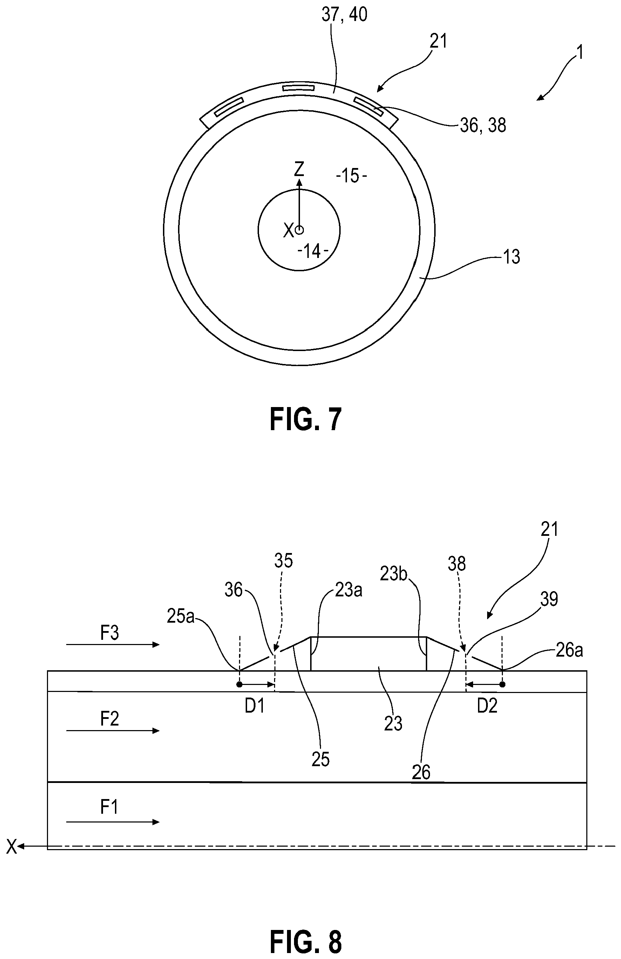

La figure 7 illustre un mode de réalisation d'un échangeur de chaleur 21. Les éléments identiques et/ou ayant la même fonction du mode de réalisation précédent sont représentés par les mêmes références numériques. Cet échangeur de chaleur 21 diffère de l'échangeur de chaleur précédent en ce qu'il s'étend sur un secteur angulaire suivant la troisième direction. Le secteur angulaire est inférieur à 360°. A titre d'exemple, l'échangeur de chaleur 21 s'étend sur un secteur angulaire compris entre 25° et 120°. La première paroi 25, la deuxième paroi 26, et le panneau 27 présentent une largeur suivant la troisième direction identique. Le panneau 27 présente une largeur égale ou supérieure à la distance sur laquelle sont disposées les ailettes 23 les unes à côté des autres. Dans cet exemple, l'échangeur de chaleur 21 comprend un dispositif d'admission d'air 35 en amont de la première paroi 25 et un dispositif d'échappement d'air en aval de la deuxième paroi 26. Chacun des dispositifs 35, 38 comprend ici trois ouvertures 36, 39 qui sont séparées par délimitées par quatre cloisons 37, 40. Bien entendu, le nombre d'ouvertures d'admission 36 peut être différent du nombre d'ouvertures d'échappement 39.

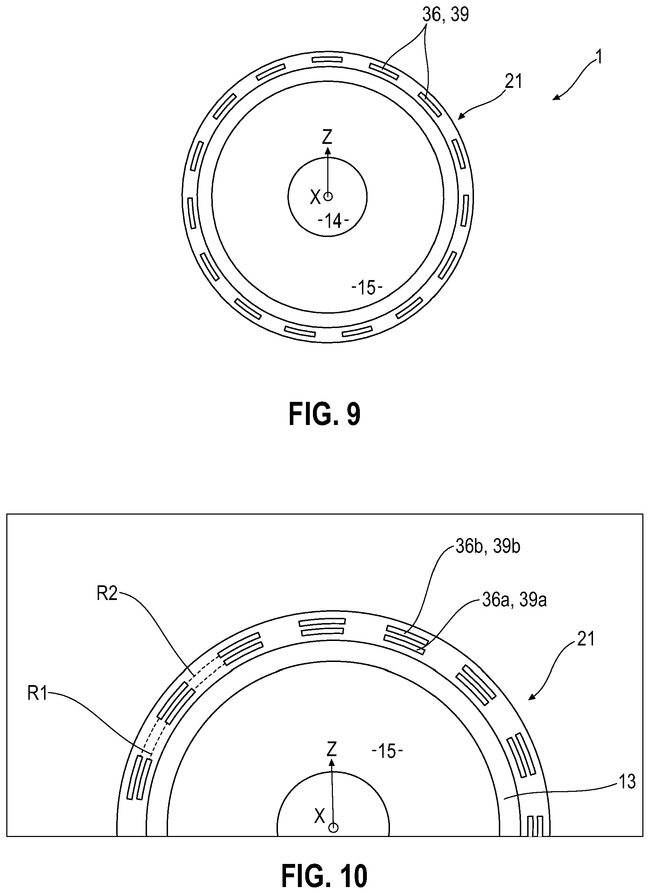

Les figures 8 et 9 illustrent encore un autre mode de réalisation de l'échangeur de chaleur 21. Les éléments identiques et/ou ayant la même fonction du mode de réalisation précédent sont représentés par les mêmes références numériques. Ce mode de réalisation diffère du mode de réalisation des figures 2 à 7 en ce que le dispositif d'admission d'air 35 est situé en aval du plan dans lequel est définie la première extrémité 25a. La première extrémité de la première paroi est reliée à la paroi de support 22. Ici, chaque ouverture 36 d'admission d'air est formée dans la première paroi 25. En d'autres termes, le flux d'air entre dans l'échangeur de chaleur 21 uniquement par les ouvertures 36 (l'échangeur de chaleur est dépourvu de cloison). Dans le cas où l'échangeur de chaleur 21 est annulaire, la première paroi 25 est annulaire. De manière alternative, l'échangeur de chaleur 21 et la première paroi 25 s'étendent sur un secteur angulaire.

Les ouvertures 36 traversent la première paroi 25 de part et d'autre transversalement et débouchent en amont des bords d'attaque 23a des ailettes 23. Chaque ouverture 36 d'admission est agencée à une distance prédéterminée D1 de la première extrémité 25a de la première paroi 25. De même, le dispositif 38 est situé en amont du plan dans lequel est définie la première extrémité 26a. Dans ce mode de réalisation, le flux d'air qui entre par les ouvertures 36 circule suivant deux directions, à savoir suivant une direction radiale et suivant une direction axiale. Le flux d'air peut circuler, en-dessous de la première paroi 25, jusqu'à l'extrémité 25a puis se diriger axialement vers les ailettes 23. Cela génère un double ralentissement. Suivant une caractéristique avantageuse, mais non limitative, l'échangeur de chaleur comprend des supports de fixation agencés entre la première paroi 25 et la paroi de support 22, et en aval des ouvertures 36. Ces supports de fixation permettant de réaliser la tenue mécanique de l'échangeur de chaleur.

L'échangeur de chaleur 21 de ce mode de réalisation comprend également un dispositif d'échappement 38. La deuxième paroi 26 est reliée à la paroi de support 22 au niveau de sa première extrémité 26a. Comme pour les ouvertures 36, les ouvertures 39 d'admission d'air traversent la deuxième paroi 26 de part et d'autre transversalement et débouchent en aval des bords de fuite 23b des ailettes 23. Chaque ouverture 39 d'échappement est agencée à une distance prédéterminée D2 de la première extrémité 26a de la deuxième paroi 26. De manière avantageuse, la distance prédéterminée D1, D2 est comprise entre 15 et 50 cm. Les distances D1, D2 peuvent varier en fonction des applications de l'échangeur de chaleur 21. Le flux d'air qui s'échappe des ailettes 23 circule vers les ouvertures 36 pour sortir de l'échangeur de chaleur. Le flux d'air sortant des ailettes peut circuler sous la deuxième paroi 26 suivant deux directions également, à savoir suivant une direction radiale et suivant une direction axiale. Le flux d'air peut circuler, en-dessous de la deuxième paroi 26, jusqu'à l'extrémité 26a puis se diriger axialement vers les ouvertures 39.

La figure 10 représente un autre mode de réalisation de l'échangeur de chaleur 21. L'échangeur de chaleur 21 est similaire à celui illustré sur les figures 8 et 9. Cet échangeur de chaleur 21 comprend les dispositifs d'admission et d'échappement 35, 38 agencés en amont et en aval des ailettes 23. Les ouvertures 36 d'admission d'air sont formées dans la première paroi 25 et les ouvertures 39 d'échappement sont formées dans la deuxième paroi 26. En particulier, les dispositifs 35, 38 comprennent chacun plusieurs ouvertures 36, 39 qui sont alignées suivant la première direction et dans un même plan axial. Ici deux ouvertures 36a, 36b sont alignées suivant la première direction L. Cette disposition forme une première rangée R1 annulaire d'ouvertures 36a et une deuxième rangée R2 annulaire d'ouvertures 36b. Une telle configuration des dispositifs permet d'améliorer la répartition de l'écoulement en amont de l'échangeur de chaleur 21, ce qui permet de réduire les pertes de charge. Cela s'applique également pour le flux d'air qui s'échappe de l'échangeur de chaleur 21 au niveau des ouvertures 39.

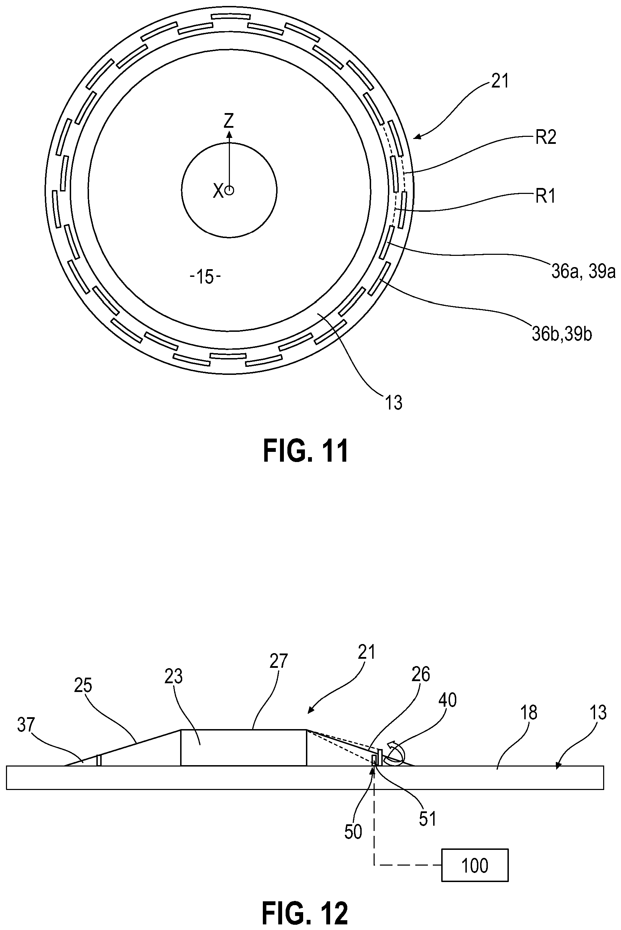

La figure 11 représente une variante du mode de réalisation précédent dans lequel plusieurs ouvertures 36a, 36b sont agencées en quinconce. Cela s'applique également pour les ouvertures 39 du dispositif 38. En particulier, les dispositifs 35, 38 comprennent la première rangée R1 annulaire d'ouvertures 36a, 39a et la deuxième rangée R2 annulaire d'ouvertures 36b, 39b. Les ouvertures 36a, 39a de la première rangée présentent un décalage angulaire avec les ouvertures 36b, 39b de la deuxième rangée. L'agencement des ouvertures 36, 39 en quinconce permet une uniformisation de l'écoulement en amont de l'échangeur de chaleur 21. Cela s'applique également pour le flux d'air qui s'échappe de l'échangeur de chaleur 21 au niveau des ouvertures 39.

La figure 12 représente une autre variante de réalisation des échangeurs de chaleur présentés précédemment. Cet échangeur de chaleur 21 comprend un dispositif de réglage 50 de débit configuré de manière à contrôler le débit traversant l'échangeur de chaleur 21 en fonction de la phase de vol de l'aéronef. Cela permet d'optimiser les performances aérothermiques de l'échangeur de chaleur 21. Le dispositif de réglage 50 comprend pour cela des portes mobiles 51 qui se déplacent au niveau d'une ou de plusieurs ouvertures 36, 39. Dans le cas d'un échangeur de chaleur 21 annulaire (360°), le dispositif de réglage 50 coopère avec le dispositif d'échappement 39. Des portes mobiles 51 sont agencées dans les ouvertures 39 et se déplacent suivant la deuxième direction de manière à faire varier la section des ouvertures 38. Les portes mobiles 51 peuvent se déplacer suivant la troisième direction C pour faire varier la section des ouvertures 39. Les portes mobiles 51 peuvent se déplacer suivant la deuxième direction R et suivant la troisième direction C. Suivant encore une autre alternative, les portes mobiles 51 peuvent se déplacer suivant une rotation.

De manière alternative, ou en complément, le dispositif de réglage 50 coopère avec le dispositif 35 d'admission et comprend des portes mobiles se déplaçant dans les ouvertures 36 pour faire varier leur section.

Suivant encore une autre alternative, certaines ouvertures d'admission et d'échappement 36, 39 sont dépourvues de portes mobiles 51. De la sorte, le débit peut être réglé en fermant complétement certaines ouvertures d'admission et d'échappement d'air et en gardant les autres complétement ouvertes.

Le déplacement des portes 51 est opéré en fonction de données de température d'un des deux fluides (source chaude et source froide) en sortie échangeur de chaleur 21 (tout en connaissant sa température d'entrée) ou de puissance thermique échangée dans l'échangeur. Pour cela, le dispositif de réglage 50 est relié à une unité de commande 100 telle que le FADEC (Full Authority Digital Engine Control). Des capteurs pourraient être disposés sur les conduites d'entrée et de sortie des fluides et être reliées électriquement à l'unité de commande 100.

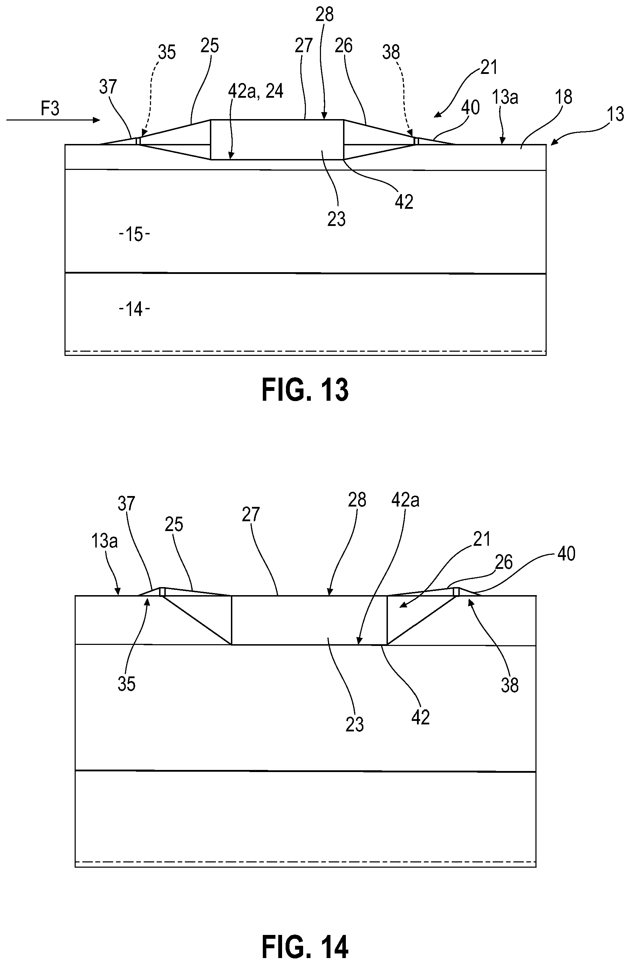

La figure 13 représente un autre mode de réalisation d'un échangeur de chaleur 21. Cet échangeur de chaleur 21 est semi enterré dans la nacelle 13. La nacelle 13 comprend un renfoncement 42 qui est réalisé dans sa paroi 18 annulaire. Le renfoncement 42 présente une surface de fond 42a qui présente un diamètre inférieur à celui de la surface radialement externe 13a de la nacelle 13. Le renfoncement 42 peut être annulaire ou s'étendre sur un secteur angulaire de la nacelle 13. Les ailettes 23 s'étendent radialement vers l'extérieur depuis la surface de fond 42a qui fait office de surface de la paroi de support. Alternativement, la paroi de support est disposée sur la surface de fond 42a. Les ailettes 23 sont enterrées environ à mi-hauteur de la hauteur he des ailettes 23. La hauteur he des ailettes 23 est supérieure à la hauteur du renfoncement 42. La hauteur du renfoncement 42 est mesurée entre la surface de fond 42a et la surface radialement externe 13a. Les ailettes 23 sont recouvertes par le panneau 27 lequel est relié en amont par la première paroi 25 et en aval par la deuxième paroi 26. Le panneau 27 est à distance de la paroi 18 de la nacelle et radialement à l'extérieur de celle-ci. Le rapport entre la première hauteur hi au niveau de l'entrée d'air 25a et la deuxième hauteur hs au niveau de la sortie d'air 26a est compris entre 0.5 et 1. Ce rapport peut être différent.

L'échangeur de chaleur 21 comprend les dispositifs d'admission et d'échappement 35, 38 agencés en amont de la première paroi 25 et en aval de la deuxième paroi 36. Les dispositifs 35, 38 présentent la même configuration que celle des modes de réalisation illustrés sur les figures 2 à 7. Des cloisons 37 prolongent la première paroi 25 vers l'amont et sont reliées à la paroi 18 de la nacelle 13. Des cloisons 40 prolongent éventuellement la deuxième paroi vers l'aval. Toutefois, les cloisons 37, 40 du dispositif d'admission et du dispositif d'échappement s'étendent à l'extérieur du renfoncement 42. Ces cloisons 37, 40 sont espacées régulièrement entre elles pour former des ouvertures d'admissions et d'échappement 36, 39. Le flux d'air F3 pénètre dans l'échangeur de chaleur 21 par les ouvertures 36 du dispositif d'admission d'air 35 et en sort par les ouvertures 39 du dispositif d'échappement d'air.

La figure 14 représente un autre mode de réalisation d'un échangeur de chaleur 21 qui est enterré dans la nacelle 13. Dans ce cas, le panneau 27 présente un diamètre externe qui est sensiblement égal au diamètre de la surface radialement externe 13a de la nacelle 13. La surface externe 28 du panneau est affleurante à celle de la surface radialement externe 13a de la nacelle. Dans cet exemple, les ailettes 23 sont agencées dans l'épaisseur de la nacelle et leur hauteur he est confondue avec l'épaisseur. Autrement dit, la hauteur he des ailettes 23 est identique à la hauteur du renfoncement 42. Les cloisons du dispositif d'admission et du dispositif d'échappement s'étendent à l'extérieur du renfoncement. Le rapport entre la première hauteur hi au niveau de l'entrée d'air 25a et la deuxième hauteur hs au niveau de la sortie d'air 26a est compris entre 0.5 et 1. Ce rapport peut être différent.

La première paroi 25 présente une inclinaison par rapport à l'axe longitudinal X et s'évase de l'aval vers l'amont. A l'inverse, la deuxième paroi 26 est inclinée par rapport à l'axe longitudinal et s'évase de l'amont vers l'aval. Le flux d'air dynamique externe F3 qui circule le long de la surface radialement externe 13a de la nacelle 13 entre par les ouvertures 36 du dispositif 35 d'admission puis vers les ailettes 23 agencées dans le renfoncement 42 puis s'évacue par les ouvertures 39 du dispositif d'échappement 38.

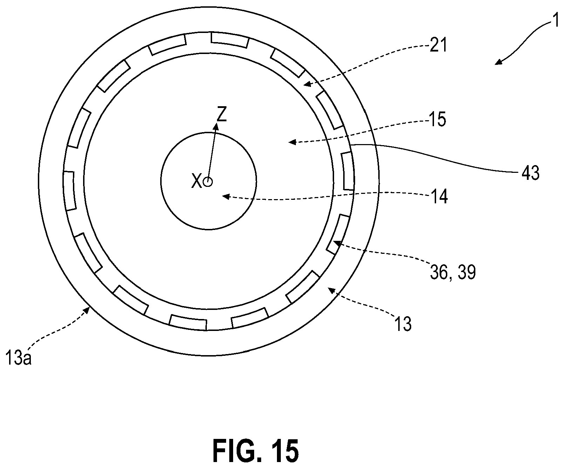

La figure 15 illustre un autre mode de réalisation de l'échangeur de chaleur 21. Sur cette figure, l'échangeur de chaleur 21 est agencé dans le carter de soufflante 12 et les ailettes 23 sont balayées par le flux d'air secondaire F2. L'échangeur de chaleur 21 est annulaire et est porté par toute la paroi radialement interne 43 du carter de soufflante 12. De manière alternative, l'échangeur de chaleur 21 est agencé sur un secteur angulaire du carter de soufflante 12. Suivant encore une autre alternative, la paroi radialement interne 43 du carter de soufflante 12 comprend un renfoncement 42 dans lequel est agencé l'échangeur de chaleur 21 pour que les ailettes 23 soient enterrées ou semi enterrées. Suivant encore une autre alternative, le carter de soufflante 12 comprend une paroi radialement externe (opposée radialement à la paroi radialement interne 42) qui porte l'échangeur de chaleur 21. Le flux d'air secondaire F2 pénètre dans l'échangeur de chaleur 21 par les ouvertures 36 du dispositif d'admission d'air 35 et en sort par les ouvertures 39 du dispositif d'échappement d'air.

## Revendications

1. Echangeur de chaleur (21) pour une turbomachine, notamment d'aéronef, d'axe longitudinal (X), l'échangeur de chaleur (21) comportant :
- une paroi de support (22) s'étendant suivant une première direction (L),
- une pluralité d'ailettes (23) s'élevant chacune suivant une deuxième direction (R) depuis une surface externe (24) de la paroi de support (22), les ailettes (23) étant destinées à être balayées par un flux d'air (F3a, F2) suivant la première direction (L),
- une première paroi (25) profilée disposée en amont des ailettes (23) et configurée de manière à guider et ralentir le flux d'air (F3a, F2) entrant dans l'échangeur de chaleur (21),
- une deuxième paroi (26) profilée disposée en aval des ailettes (23) et configurée de manière à accélérer le flux d'air (F3a, F2) sortant de l'échangeur de chaleur (21), et
- un panneau (27) profilé recouvrant les ailettes (23), le panneau (27) profilé s'étendant suivant la première direction (L) entre la première paroi (25) et la deuxième paroi (26) auxquelles celui-ci est fixé,
**caractérisé en ce que** l'échangeur de chaleur (21) comprend un système de diffusion d'air comprenant un dispositif (35) d'admission d'air configuré de manière à ralentir le flux d'air dans une troisième direction (C), le dispositif (35) comportant plusieurs ouvertures (36) d'admission d'air distinctes qui sont agencées en amont des ailettes (23) suivant la première direction (L) et qui sont réparties suivant la troisième direction (C).

2. Echangeur de chaleur (21) selon la revendication précédente, **caractérisé en ce que** la première paroi (25) présente une première extrémité (25a) formant une entrée d'air (25aa) avec la paroi de support (22), le dispositif (35) d'admission d'air étant situé en amont du plan dans lequel est définie l'entrée d'air (25aa).

3. Echangeur de chaleur (21) selon la revendication 1, **caractérisé en ce que** la première paroi (25) présente une première extrémité (25a) reliée à la paroi de support (22), le dispositif (35) d'admission d'air étant situé en aval du plan dans lequel est définie la première extrémité (25a), les ouvertures (36) d'admission d'air étant formées dans la première paroi (25) et étant agencées à une distance prédéterminée (D1) de la première extrémité (25a) de la première paroi (25).

4. Echangeur de chaleur (21) selon quelconques des revendications précédentes, **caractérisé en ce que** le système de diffusion comprend un dispositif (38) d'échappement d'air configuré de manière à accélérer le flux d'air dans la troisième direction, le dispositif (38) d'échappement comportant plusieurs ouvertures (39) d'échappement d'air distinctes qui sont agencées en aval des ailettes (23) suivant la première direction et qui sont réparties suivant la troisième direction.

5. Echangeur de chaleur (21) selon la revendication précédente, **caractérisé en ce que** la deuxième paroi (26) présente une première extrémité (26a) formant une sortie d'air (26aa) avec la paroi de support (22), le dispositif (38) d'échappement d'air étant situé en aval du plan dans lequel est définie la sortie d'air (26aa).

6. Echangeur de chaleur (21) selon la revendication 4, **caractérisé en ce que** la deuxième paroi (26) présente une première extrémité (26a) reliée à la paroi de support (22), le dispositif (38) d'échappement d'air étant situé en amont du plan dans lequel est définie la première extrémité (26a), les ouvertures (39) d'admission étant formées dans la deuxième paroi (26) et étant agencées à une distance prédéterminée (D2) de la première extrémité (26a) de la deuxième paroi (26).

7. Echangeur de chaleur (21) selon l'une quelconque des revendications précédentes, **caractérisé en ce que** le nombre d'ouvertures (36, 39) d'admission d'air du dispositif (35) d'admission d'air et /ou du dispositif (38) d'échappement d'air est compris entre 1 et 100.

8. Echangeur de chaleur (21) selon l'une quelconque des revendications précédentes, **caractérisé en ce que** le dispositif (35) d'admission et/ou le dispositif (38) d'échappement comprend/comprennent plusieurs rangées (R1, R2) d'ouvertures (36, 39), chaque rangée (R1, R2) comprenant des ouvertures (36a, 36b, 39a, 39b) qui sont alignées suivant la troisième direction, et les ouvertures (36a, 36b, 39a, 39b) des rangées étant alignées suivant la première direction ou présentant un décalage angulaire.

9. Echangeur de chaleur (21) selon l'une quelconque des revendications précédentes, **caractérisé en ce qu'**il comprend un dispositif de réglage (50) de débit, le dispositif de réglage (50) comprenant une porte mobile (51) qui est agencée dans une ouverture (36, 39), la porte mobile (51) se déplaçant dans l'ouverture (36, 39) suivant la première direction et/ou suivant la deuxième direction de sorte à faire varier la section de l'ouverture (36, 39).

10. Echangeur de chaleur (21) selon l'une quelconque des revendications précédentes, **caractérisé en ce qu'**il est annulaire ou s'étend sur un secteur angulaire.

11. Turbomachine (1) d'axe longitudinal X comprenant une soufflante (3), un carter (12) annulaire qui est centré sur l'axe longitudinal (X) et qui entoure la soufflante (3), et un échangeur de chaleur (21) selon l'une quelconque des revendications précédentes.

12. Turbomachine (1) selon la revendication précédente, **caractérisée en ce qu'**elle comprend une nacelle (13) disposée radialement à l'extérieur du carter (12) annulaire et autour duquel est destiné à circuler un air dynamique externe (F3), l'échangeur de chaleur (21) étant disposé radialement à l'extérieur de la nacelle (13) et une portion (F3a) de l'air dynamique externe (F3) formant le flux d'air balayant les ailettes (23).

13. Turbomachine (1) selon l'une des revendications 11 et 12, **caractérisée en ce que** l'échangeur de chaleur (21) est disposé radialement à l'intérieur du carter (12) annulaire dans lequel est destiné à circuler un écoulement d'air (F2), une portion de l'écoulement d'air formant le flux d'air balayant les ailettes (23).

14. Turbomachine (1) selon l'une des revendications 12 et 13, **caractérisée en ce que** la nacelle (13) ou le carter annulaire (12) comprend une paroi annulaire (18, 43) qui comporte un renfoncement (42) dans lequel est installé l'échangeur de chaleur (21), les ailettes (23) présentant une hauteur (he) supérieure ou égale à la hauteur du renfoncement (42).

## Patentansprüche

1. Wärmetauscher (21) für ein Turbotriebwerk, insbesondere eines Luftfahrzeugs, mit einer Längsachse (X), wobei der Wärmetauscher (21) umfasst:
- eine Stützwand (22), die sich entlang einer ersten Richtung (L) erstreckt,
- eine Vielzahl von Rippen (23), die sich jeweils entlang einer zweiten Richtung (R) aus einer Außenoberfläche (24) der Stützwand (22) erheben, wobei die Rippen (23) dazu bestimmt sind, von einem Luftstrom (F3a, F2) entlang der ersten Richtung (L) durchströmt zu werden,
- eine erste profilierte Wand (25), die stromaufwärts der Rippen (23) angeordnet ist und konfiguriert ist, um den in den Wärmetauscher (21) eintretenden Luftstrom (F3a, F2) zu leiten und zu verzögern,
- eine zweite profilierte Wand (26), die stromabwärts der Rippen (23) angeordnet ist und konfiguriert ist, um den aus dem Wärmetauscher (21) austretenden Luftstrom (F3a, F2) zu beschleunigen, und
- eine profilierte Platte (27), welche die Rippen (23) bedeckt, wobei sich die profilierte Platte (27) entlang der ersten Richtung (L) zwischen der ersten Wand (25) und der zweiten Wand (26), an denen diese befestigt ist, erstreckt,
**dadurch gekennzeichnet, dass** der Wärmetauscher (21) ein Luftverbreitungssystem umfasst, das eine Lufteinlassvorrichtung (35) umfasst, die konfiguriert ist, um den Luftstrom in einer dritten Richtung (C) zu verzögern, wobei die Vorrichtung (35) mehrere verschiedene Lufteinlassöffnungen (36) umfasst, die stromaufwärts der Rippen (23) entlang der ersten Richtung (L) angeordnet sind, und die entlang der dritten Richtung (C) verteilt sind.

2. Wärmetauscher (21) nach dem vorstehenden Anspruch, **dadurch gekennzeichnet, dass** die erste Wand (25) ein erstes Ende (25a) aufweist, das einen Lufteingang (25aa) mit der Stützwand (22) bildet, wobei sich die Lufteinlassvorrichtung (35) stromaufwärts der Ebene befindet, in welcher der Lufteingang (25aa) definiert ist.

3. Wärmetauscher (21) nach Anspruch 1, **dadurch gekennzeichnet, dass** die erste Wand (25) ein erstes Ende (25a) aufweist, das mit der Stützwand (22) verbunden ist, wobei sich die Lufteinlassvorrichtung (35) stromabwärts der Ebene befindet, in der das erste Ende (25a) definiert ist, wobei die Luftaufnahmeöffnungen (36) in der ersten Wand (25) gebildet sind, und in einem vorbestimmten Abstand (D1) zum ersten Ende (25a) der ersten Wand (25) angeordnet sind.

4. Wärmetauscher (21) nach einem der vorstehenden Ansprüche, **dadurch gekennzeichnet, dass** das Verbreitungssystem eine Luftauslassvorrichtung (38) umfasst, die konfiguriert ist, um den Luftstrom in der dritten Richtung zu beschleunigen, wobei die Auslassvorrichtung (38) mehrere verschiedene Luftauslassöffnungen (39) umfasst, die stromabwärts der Rippen (23) entlang der ersten Richtung angeordnet sind, und die entlang der dritten Richtung verteilt sind.

5. Wärmetauscher (21) nach dem vorstehenden Anspruch, **dadurch gekennzeichnet, dass** die zweite Wand (26) ein erstes Ende (26a) aufweist, das einen Luftausgang (26aa) mit der Stützwand (22) bildet, wobei sich die Luftauslassvorrichtung (38) stromabwärts der Ebene befindet, in welcher der Luftausgang (26aa) definiert ist.

6. Wärmetauscher (21) nach Anspruch 4, **dadurch gekennzeichnet, dass** die zweite Wand (26) ein erstes Ende (26a) aufweist, das mit der Stützwand (22) verbunden ist, wobei sich die Luftauslassvorrichtung (38) stromaufwärts der Ebene befindet, in der das erste Ende (26a) definiert ist, wobei die Lufteinlassöffnungen (39) in der zweiten Wand (26) gebildet sind, und in einem vorbestimmten Abstand (D2) zum ersten Ende (26a) der zweiten Wand (26) angeordnet sind.

7. Wärmetauscher (21) nach einem der vorstehenden Ansprüche, **dadurch gekennzeichnet, dass** die Anzahl an Lufteinlassöffnungen (36, 39) der Lufteinlassvorrichtung (35) und/oder der Luftauslassvorrichtung (38) zwischen 1 und 100 umfasst ist.

8. Wärmetauscher (21) nach einem der vorstehenden Ansprüche, **dadurch gekennzeichnet, dass** die Einlassvorrichtung (35) und/oder die Auslassvorrichtung (38) mehrere Reihen (R1, R2) an Öffnungen (36, 39) umfasst/umfassen, wobei jede Reihe (R1, R2) Öffnungen (36a, 36b, 39a, 39b) umfasst, die entlang der dritten Richtung ausgerichtet sind, und die Öffnungen (36a, 36b, 39a, 39b) der Reihen entlang der ersten Richtung ausgerichtet sind oder einen Winkelversatz aufweisen.

9. Wärmetauscher (21) nach einem der vorstehenden Ansprüche, **dadurch gekennzeichnet, dass** er eine Durchsatz-Einstellvorrichtung (50) umfasst, wobei die Einstellvorrichtung (50) eine bewegliche Tür (51) umfasst, die in einer Öffnung (36, 39) angeordnet ist, wobei sich die bewegliche Tür (51) in der Öffnung (36, 39) entlang der ersten Richtung und/oder entlang der zweiten Richtung verschiebt, um den Öffnungsabschnitt (36, 39) variieren zu lassen.

10. Wärmetauscher (21) nach einem der vorstehenden Ansprüche, **dadurch gekennzeichnet, dass** er ringförmig ist oder sich über einen Winkelsektor erstreckt.

11. Turbotriebwerk (1) mit einer Längsachse X, das ein Gebläse (3), ein ringförmiges Gehäuse (12), das auf der Längsachse (X) zentriert ist, und das Gebläse (3) umgibt, und eine Wärmetauscher (21) nach einem der vorstehenden Ansprüche umfasst.

12. Turbotriebwerk (1) nach dem vorstehenden Anspruch, **dadurch gekennzeichnet, dass** es eine Gondel (13) umfasst, die radial an der Außenseite des ringförmigen Gehäuses (12) angeordnet ist, und um das herum eine dynamische Außenluft (F3) bestimmt ist, zu zirkulieren, wobei der Wärmetauscher (21) radial an der Außenseite der Gondel (13) angeordnet ist, und ein Abschnitt (F3a) der dynamischen Außenluft (F3) den Luftstrom bildet, der die Rippen (23) durchströmt.

13. Turbotriebwerk (1) nach einem der Ansprüche 11 und 12, **dadurch gekennzeichnet, dass** der Wärmetauscher (21) radial an der Innenseite des ringförmigen Gehäuses (12) angeordnet ist, in dem eine Luftströmung (F2) dazu bestimmt ist, zu zirkulieren, wobei ein Abschnitt der Luftströmung den Luftstrom bildet, der die Rippen (23) durchströmt.

14. Turbotriebwerk (1) nach einem der Ansprüche 12 und 13, **dadurch gekennzeichnet, dass** die Gondel (13) oder das ringförmige Gehäuse (12) eine ringförmige Wand (18, 43) umfasst, die eine Vertiefung (42) umfasst, in welcher der Wärmetauscher (21) installiert ist, wobei die Rippen (23) eine Höhe (he) größer oder gleich der Höhe der Vertiefung (42) aufweisen.

## Claims

1. A heat exchanger (21) for a turbomachine, in particular an aircraft turbomachine, having a longitudinal axis (X), the heat exchanger (21) comprising:
- a support wall (22) extending in a first direction (L),
- a plurality of fins (23) each rising in a second direction (R) from an external surface (24) of the support wall (22), the fins (23) being configured to be swept by an air stream (F3a, F2) in the first direction (L),
- a first profiled wall (25) arranged upstream of the fins (23) and configured so as to guide and decelerate the air stream (F3a, F2) entering the heat exchanger (21),
- a second profiled wall (26) arranged downstream of the fins (23) and configured so as to accelerate the air stream (F3a, F2) leaving the heat exchanger (21), and
- a profiled panel (27) covering the fins (23), the profiled panel (27) extending in the first direction (L) between the first wall (25) and the second wall (26) to which it is attached,
**characterized in that** the heat exchanger (21) comprises an air diffusion system comprising an air intake device (35) configured to decelerate the air stream in a third direction (C), the device (35) comprising a plurality of separate air intake openings (36) which are arranged upstream of the fins (23) in the first direction (L) and which are distributed in the third direction (C).

2. The heat exchanger (21) according to the preceding claim, **characterized in that** the first wall (25) has a first end (25a) forming an air inlet (25aa) with the support wall (22), the air intake device (35) being located upstream of the plane in which the air inlet (25aa) is defined.

3. The heat exchanger (21) according to claim 1, **characterized in that** the first wall (25) has a first end (25a) connected to the support wall (22), the air intake device (35) being located downstream of the plane in which the first end (25a) is defined, the air intake openings (36) being formed in the first wall (25) and being arranged at a predetermined distance (D1) from the first end (25a) of the first wall (25).

4. The heat exchanger (21) according to any of the preceding claims, **characterized in that** the diffusion system comprises an air exhaust device (38) configured so as to accelerate the air stream in the third direction, the exhaust device (38) comprising a plurality of separate air exhaust openings (39) which are arranged downstream of the fins (23) in the first direction and which are distributed in the third direction.

5. The heat exchanger (21) according to the preceding claim, **characterized in that** the second wall (26) has a first end (26a) forming an air outlet (26aa) with the support wall (22), the air exhaust device (38) being located downstream of the plane in which the air outlet (26aa) is defined.

6. The heat exchanger (21) according to claim 4, **characterized in that** the second wall (26) has a first end (26a) connected to the support wall (22), the air exhaust device (38) being located upstream of the plane in which the first end (26a) is defined, the intake openings (39) being formed in the second wall (26) and being arranged at a predetermined distance (D2) from the first end (26a) of the second wall (26).

7. The heat exchanger (21) according to any one of the preceding claims, **characterized in that** the number of air intake openings (36, 39) of the air intake device (35) and/or of the air exhaust device (38) is between 1 and 100.

8. The heat exchanger (21) according to any one of the preceding claims, **characterized in that** the intake device (35) and/or the exhaust device (38) comprise a plurality of rows (R1, R2) of openings (36, 39), each row (R1, R2) comprising openings (36a, 36b, 39a, 39b) which are aligned in the third direction, and the openings (36a, 36b, 39a, 39b) of the rows being aligned in the first direction or having an angular offset.

9. The heat exchanger (21) according to any of the preceding claims, **characterized in that** it comprises a flow rate adjustment device (50), the adjustment device (50) comprising a movable door (51) which is arranged in an opening (36, 39), the movable door (51) moving in the opening (36, 39) in the first direction and/or in the second direction so as to vary the cross-section of the opening (36, 39).

10. The heat exchanger (21) according to any one of the preceding claims, **characterized in that** it is annular or extends over an angular sector.

11. A turbomachine (1) of longitudinal axis X comprising a fan (3), an annular casing (12) which is centered on the longitudinal axis (X) and which surrounds the fan (3), and a heat exchanger (21) according to any one of the preceding claims.

12. The turbomachine (1) according to the preceding claim, **characterized in that** it comprises a nacelle (13) disposed radially outside the annular casing (12) and around which an external dynamic air (F3) is configured to circulate, the heat exchanger (21) being disposed radially outside the nacelle (13) and a portion (F3a) of the external dynamic air (F3) forming the air stream sweeping the fins (23).

13. The turbomachine (1) according to one of claims 11 and 12, **characterized in that** the heat exchanger (21) is disposed radially inside the annular casing (12) in which an air stream (F2) is configured to circulate, a portion of the air stream forming the air stream sweeping the fins (23).

14. The turbomachine (1) according to one of claims 12 and 13, **characterized in that** the nacelle (13) or the annular casing (12) comprises an annular wall (18, 43) which comprises a recess (42) in which the heat exchanger (21) is installed, the fins (23) having a height (he) greater than or equal to the height of the recess (42).
